# EUROPÄISCHE PATENTSCHRIFT

(11) **EP 2 899 820 B1**
(45) Veröffentlichungstag und Bekanntmachung des Hinweises auf die Patenterteilung: **04.07.2018**
(21) Anmeldenummer: 15000185.7
(22) Anmeldetag: 23.01.2015
(51) Int. Cl.: H02G 11/02, B65H 75/44

(54) **Kabeltrommel mit integriertem Servoverstärker zur Steuerung eines externen Servomotors mit einem offenen Kühlsystem**
Cable drum with integrated servo amplifier for controlling an external servomotor with an open cooling system
Tambour à câble doté d'un amplificateur pour servo intégré destiné à commander un servomoteur équipé d'un système de refroidissement ouvert

(30) Priorität: 24.01.2014 DE 102014000777
(43) Veröffentlichungstag der Anmeldung: 29.07.2015
(73) Patentinhaber: Munsch, Stefan, 56237 Wirscheid (DE); Brehm, Bernhard, 75365 Calw-Stammheim (DE)
(72) Erfinder: Brehm, Bernhard, 75365 Calw- Stammheim (DE)
(74) Vertreter: Ludewig, Rita

(56) Entgegenhaltungen:
- DE-A1-102004 020 448
- DE-A1-102004 041 316
- DE-A1-102006 012 470
- DE-B4- 10 164 304
- DE-U- 7 314 566
- DE-U1- 20 300 805
- JP-A- H0 974 659
- JP-U- S63 179 730
- US-A1- 2006 266 868

## Beschreibung

Die Erfindung betrifft eine Kabeltrommel mit integriertem Servoverstärker zur Steuerung eines externen Servomotors mit einem offenen Kühlsystem.

Es sind eine Vielzahl von Kühlsystemen und Kühlkörpern an Kabeltrommeln bekannt. So sieht die DE 7314566 U1 eine Kabeltrommel vor, bei der die Möglichkeit eines Wärmestaues weitgehend vermieden oder zumindest stark vermindert werden soll. Das wird durch die Anordnung von Ausnehmungen am Rollenkörper erreicht, die sich zumindest nach einer Stirnseite ins Freie fortsetzen. Auch sind am Rollenkörper radial angeordnete Rippen vorgesehen, zwischen denen nach einer Seite, sich ins Freie fortsetzende, Zwischenräume liegen.

Auch aus der DE 10 2004 020 448 A1 ist eine gekühlte Kabeltrommel zur Aufnahme elektrischer Kabel bekannt, dadurch gekennzeichnet, daß das Kabel Lage für Lage, geordnet nach stets frei liegender Oberfläche, aufgewickelt wird so, daß ein vorzugsweise gasförmiges Kühlmedium wie Luft unmittelbar das Kabel und/oder den Wickelkörper kühlt. Dabei soll das Kühlmedium künstlich bewegt werden und die Trommel mit Kühlöffnungen, Kühlrippen, Kühl- Leiteinrichtungen und Kabel- Leiteinrichtungen ausgestattet sein. Um das Grundprinzip der gleichmäßig gekühlten Kabeltrommel realisieren zu können, sind eine Vielzahl zusätzlicher mechanischer und elektrischer Baugruppen erforderlich, so eine Schleifringkupplung, Antriebsmotoren, Getriebe und/oder Kupplungen, schwenkbare Lenkrollen, Sicherungsösen, eine Aufhängeachse, die sensorisch über den Kabelzug oder durch Fernsteuerung geschaltet werden können, sowie Spulvorrichtungen zur Lenkung des Kabels beim Aufwickeln. Die Trommel soll darüber hinaus wahlweise eine oder mehrere konzentrisch außen umschließende weitere Trommeln aufweisen, die jeweils einen längs verlaufenden Schlitz aufweisen und durch ein Schaltgetriebe und/oder einzelne Motoren kontrolliert angetrieben werden usw..

Diese Lösung beinhaltet eine komplizierte und materialaufwendige Konstruktion, deren Handhabung äußerst kompliziert erscheint und vermutlich sehr kostenaufwendig ist.

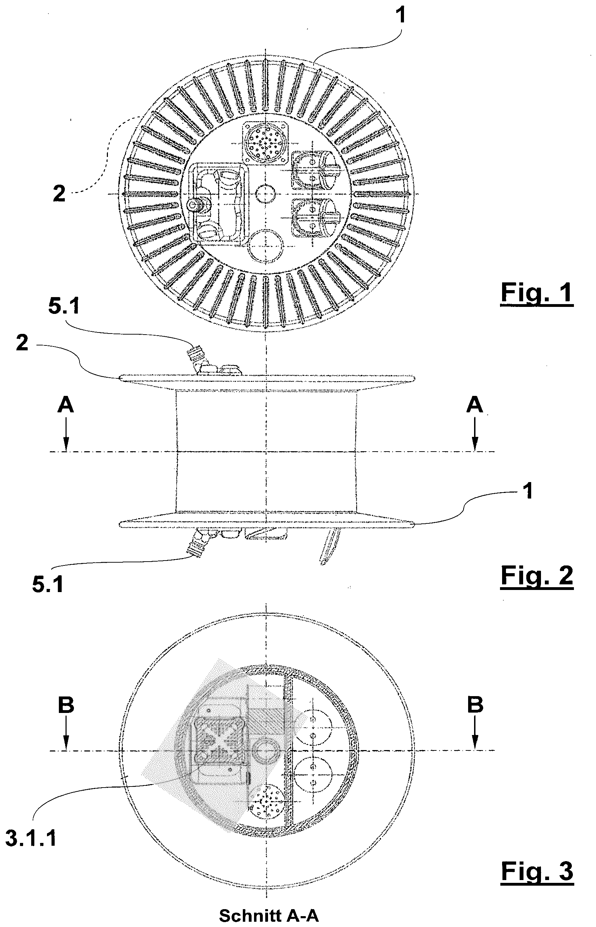

Schließlich ist aus der DE 101 64 304 B4 2004.05.13 eine Kabelrolle mit integrierter Frequenzumformeinrichtung bekannt, gekennzeichnet dadurch, daß die Frequenzumformeinrichtung im wesentlichen ortsfest an den Rahmen angebracht ist und daß wenigstens eine von der Frequenzumformeinrichtung gespeiste Steckdose beim Drehen der Trommel ortsfest angeordnet ist. In den Unteransprüchen 2 und 3 werden Gehäusekonstruktionen beschrieben, deren Realisierung für den Fachmann schwer nachvollziehbar ist und deren konstruktiver Aufbau weder aus der Beschreibung noch aus den Zeichnungen verständlich offenbart sind. In den Ansprüchen 4 und 5 wird des weiteren eine Kühlung beschrieben, bei der sich Luft zur Kühlung in einem Zwischenraum zwischen einer zusätzlichen Gehäusewand und der Trommel oder zwischen der Gehäusewand und der Frequenzumformeinrichtung befindet. Außerdem wird im Anspruch 7 eine Kühleinrichtung zur Kühlung der Frequenzumformeinrichtung vorgesehen. In der Beschreibung, Absatz (0013) wird es als vorteilhaft angesehen, die Frequenzumformeinrichtung derart mit der Trommel zu kombinieren, daß eine möglichst gute Kühlung des Systems bewerkstelligt werden kann. Das ist lediglich eine Absichtserklärung. Danach werden sehr allgemeine Maßnahmen wie eine gezielte Anbringung von Luftschlitzen oder Kühlkörpern am Rahmen oder an der Frequenzumformeinrichtung oder auch an der Trommel geschildert. Auch wird die Integration von Lüftern oder speziellen Kühlflüssigkeiten in der Kabelrolle angedeutet. An keiner Stelle der Druckschrift ist wenigstens eine zumindest angedeutete konstruktive Form einer Kühlung zu erkennen. In den Zeichnungen Fig. 2, 3 und 6 sind mit Ziffer 11 Kühleinrichtungen angedeutet. Vergleicht man diese Anordnungen mit dem Grundgestell in Fig.1 ist die Anordnung und vor allem Wirkungsweise der geschlossenen Kühleinrichtungen auch mit viel Phantasie schlecht nachvollziehbar.

Die bekannten Kühlkörper oder Kühleinrichtungen für Kabeltrommeln sind konstruktiv aufwendig und teuer. Die größte Schwäche der geschlossenen Kühleinrichtungen besteht darin, daß beispielsweise bei einer Wasserkühlung das Restwasser in den Kühlkörpern gefriert und der Kühlkörper zerstört wird.

Es war deshalb Aufgabe der Erfindung eine Kabeltrommel mit einem integrierten Servoverstärker und einem offenen Kühlsystem zu entwickeln, das eine kostengünstige, leichte und einfache Konstruktion, sowie eine erheblich erweiterte Kühlfläche zur Ableitung unerwünschter Wärmeentwicklung aufweist, bei dem sich bei Gefriertemperaturen, das Kühlsystem automatisch öffnet, dessen Zerstörung verhindert und dessen Lebensdauer erheblich erhöht und bei dem keine Feuchtigkeit in die elektronischen Teile eindringen kann, wodurch Kurzschlüsse vermieden werden.

Die Aufgabe wird mit den Merkmalen des Anspruchs 1 gelöst, wobei das Gehäuse der Kabeltrommel aus zwei einstückigen Gehäuseteilen mit an den Außenflächen radial angeformten Kühlrippen besteht, die Gehäuseteile an den Innenflächen jeweils axial gegenüberliegend eine Zylinderwand und innerhalb der Zylinderwand jeweils einen Aufnahmestutzen aufweisen, der Kühlkörper aus den zwei einstückigen Gehäuseteilen besteht, die über einen, zwischen den Aufnahmestutzen angeordneten wasser- oder luftführenden, lamellierten Hohlkörper wasserdicht oder luftdicht miteinander verbunden sind und die Gehäuseteile mit dem Hohlkörper einen ganzheitlichen, aktiven Kühlkörper bilden,
Dieser ganzheitliche Kühlkörper, der den gesamten Körper der Kabeltrommel einbezieht, hat den großen Vorteil, daß eine erheblich erweiterte Kühlfläche zur Ableitung unerwünschter Wärmeentwicklung zur Verfügung steht.

Besonders vorteilhaft ist der konstruktive Aufbau des offenen Kühlsystems, bei dem jeweils eine Abdeckkappe mit einem Wasserein- und -auslaufstutzen sowie einer Leckagestelle für eine Wasserkühlung oder mit einem Lüfter für eine Luftkühlung ausgestattet und in jeweils einen der Aufnahmestutzen einzustecken ist. Die Wasserein- und -auslaufstutzen in den

Abdeckkappen gewährleisten einen regelbaren Wasser- oder Luftdurchfluß durch den ganzheitlichen, aktiven Kühlkörper und verschließen das offene Kühlsystem der Kabeltrommel. Des Weiteren kann durch die Leckagestellen Wasser aus dem lamellierten Hohlkörper abgeführt werden.

Besonders hervorzuheben ist die Anordnung des Servoverstärkers in den Gehäuseteilen der Kabeltrommel, innerhalb der Zylinderwände, über dem lamellierten Hohlkörper, dessen Wärme abgebende Teile mit der axialen Außenwand des lamellierten Hohlkörpers kontaktierend verbunden sind. Die erhebliche Wärmeerzeugung des Servoverstärkers kann so über die erheblich vergrößerte Oberfläche des ganzheitlichen Kühlkörpers problemlos abgeführt werden.

Vorteilhaft ist auch die wasser- oder luftdichte kraftschlüssige Verbindung zwischen den Aufnahmestutzen der Gehäuseteile mit den Stirnflächen des lamellierten Hohlkörpers, gemäß Anspruch 2. Sie unterstützt den wasserdichten Verschluß des ganzheitlichen Kühlkörpers durch leichte Handhabung, gewährleisten, daß keine Feuchtigkeit zu den elektronischen Teilen vordringen kann, wodurch Kurzschlüsse und daraus resultierende Reparaturen oder Ausfallzeiten vermieden werden.

Die, gemäß Anspruch 3, vorteilhaft von der Außenwand des Gehäuseteils zugänglich angeordneten Steckdosen mit Verschlußdeckel für die Energiezufuhr und eine Adapterdose für die Verbindung eines Servomotors mit dem Servoverstärker gewährleisten erforderliche elektrische Steuer- und Regelverbindungen der Kabeltrommel.

Ebenfalls von Vorteil ist der einfache konstruktive Aufbau der Kabeltrommel sowie die Materialauswahl, gemäß Anspruch 4, für den ganzheitlichen Kühlkörper aus Aluminium, die eine einfache, kostengünstige und leichte Konstruktion gestattet.

Schließlich sichert die Materialauswahl für die Abdeckkappen aus Kunststoff, gemäß Anspruch 5, insbesondere im Ruhezustand der Kabeltrommel bei Gefrieren von Restwasser im lamellierten Hohlkörper, daß die aus Kunststoff bestehenden Abdeckkappen aus den Aufnahmestutzen der Gehäuseteile herausgedrückt werden können, wodurch Schaden am ganzheitlichen Kühlkörper vermieden werden kann und Feuchtigkeit nicht in den elektronischen Gehäusebereich und den Servoverstärker eindringen kann.

Die Erfindung soll nachstehend anhand eines Ausführungsbeispiels beschrieben werden, das in den Zeichnungen näher dargestellt ist. Dabei zeigen:
- Fig.1: Seitenansicht der erfindungsgemäßen Kabeltrommel ohne Kabel,
- Fig.2: Vorderansicht der Kabeltrommel ohne Kabel von Fig.1,
- Fig.3: Schnittdarstellung A-A quer durch das Innere der Kabeltrommel von Fig. 1,
- Fig.4: perspektivische Explosionszeichnung von Fig. 1,
- Fig.5: Schnittdarstellung B-B längs durch die bestückte und verschlossene Kabeltrommel ohne Kabel mit Darstellung eines Wasserkreislaufs,
- Fig.6: Seitenansicht einer bestückten Kabeltrommel mit aufgewickeltem Kabel auf der drehbaren Achse eines Traggestells montiert,
- Fig.7: Vorderansicht von Fig. 6.

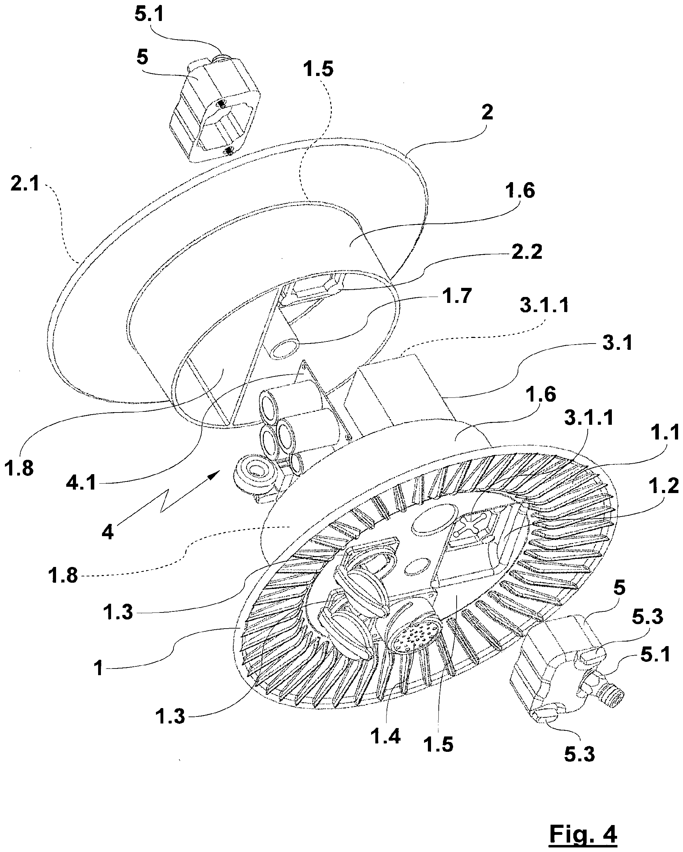

In einem Ausführungsbeispiel wird eine Kabeltrommel mit integrierten Servoverstärker 4 und einem offenen Wasserkühlsystem beschrieben. Gemäß Fig.4, sind zwei erfindugsgemäße Gehäuseteile 1 und 2 vorzugsweise aus Aluminium zu erkennen, deren Außenflächen mit radial angeformten Kühlrippen 1.1 und 1.2 ausgestattet sind. An den Innenflächen weisen die Gehäuseteile 1 und 2 jeweils axial gegenüberliegend eine angeformte Zylinderwand 1.6 auf. Jeweils eine nach außen gerichtete Stirnfläche 1.5 verfügt über einen, zwischen einer angeformten Achshülse 1.7 und der Zylinderwand 1.6 angeformten, axial nach innen gerichteten Aufnahmestutzen 1.2 und 2.2. Ein lamellierter Hohlkörper 3.1 vorzugsweise aus Aluminium wird mit einer Stirnfläche 3.1.1 mit dem Aufnahmestutzen 1.1 des Gehäuseteils 1 kraftschlüssig und wasserdicht verschlossen. Der auf einer Platte 4.1 montierte Servoverstärker 4 wird neben der Achshülse 1.7 unter einer an der Zylinderwand 1.6 beider Gehäuseteile 1 und 2 segmentartig angeformte Stabilisierungsfläche 1.8 im Gehäuseteil 1 befestigt und mit in der Stirnfläche 1.5 von außen zugänglich angeordneten Steckdosen 1.3 und Adapterdose 1.4 elektrisch verbunden. Danach werden beide Gehäuseteile 1 und 2 so ineinandergesteckt, daß die zweite Stirnfläche 3.1.1 des lamellierten Hohlkörpers 3.1 mit dem Aufnahmestutzen 2.2 des Gehäuseteils 2 kraftschlüssig und wasserdicht miteinander verbunden werden kann, so daß die wärmeabgebenden Teile des Servoverstärkers 4 mit der Außenwand des lamellierten Höhlkörpers 3.1 direkten Kontakt haben. Die Gehäuseteile 1 und 2 der Kabeltrommel bilden nun mit dem lamellierten Hohlkörper 3.1 einen ganzheitlichen Kühlkörper 3. Nun wird eine Abdeckkappe 5 mit Wassereinlaufstutzen 5.1 und Leckagestelle 5.2 in den Aufnahmestutzen 1.2 des Geräteteils 1 gesteckt und mit Rastelementen 5.3 in der Stirnfläche 1.5 verriegelt. Gemäß Fig.2 ragt nun der Wassereinlaufstutzen 5.1 aus der Stirnfläche 1.5 des Gehäuseteils 1 heraus. Die zweite Abdeckkappe 5 mit dem Wasserauslaufstutzen 5.1 wird in den Aufnahmestutzen 2.2 des Geräteteils 2 gesteckt und auf die gleiche beschriebene Weise verriegelt. Im Schnitt A-A, Fig. 3 ist die Lage der im Gehäuseinneren angeordneten Teile dargestellt.

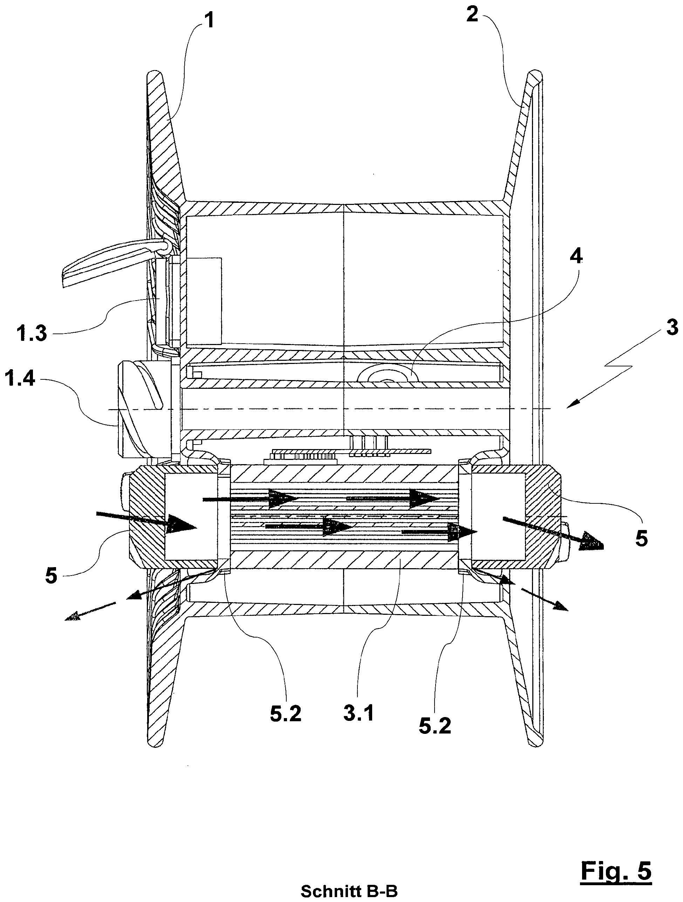

Fig. 5 zeigt den Schnitt B-B aus Fig. 3. Hier ist besonders der ganzheitliche Kühlkörper 3, der aus den Geräteteilen 1 und 2 sowie aus dem lamellierten Höhlkörper 3.1 gebildet ist, zu erkennen. Außerdem ist mit großen Pfeilen der Wasserdurchlauf vom Wassereinlaufstutzen 5.1 des Gehäuseteils 1 durch den lamellierten Hohlkörper 3.1 in den Wasserauslaufstutzen 5.1 des Gehäuseteils 2 dargestellt. Die Abwärme des Servoverstärkers 4 wird direkt auf die Außenfläche des lammelierten Hühlkörpers 3.1 übertragen und mit dem Wasser aus dem lamelierten Hohlkörper 3.1 herausgeleitet.

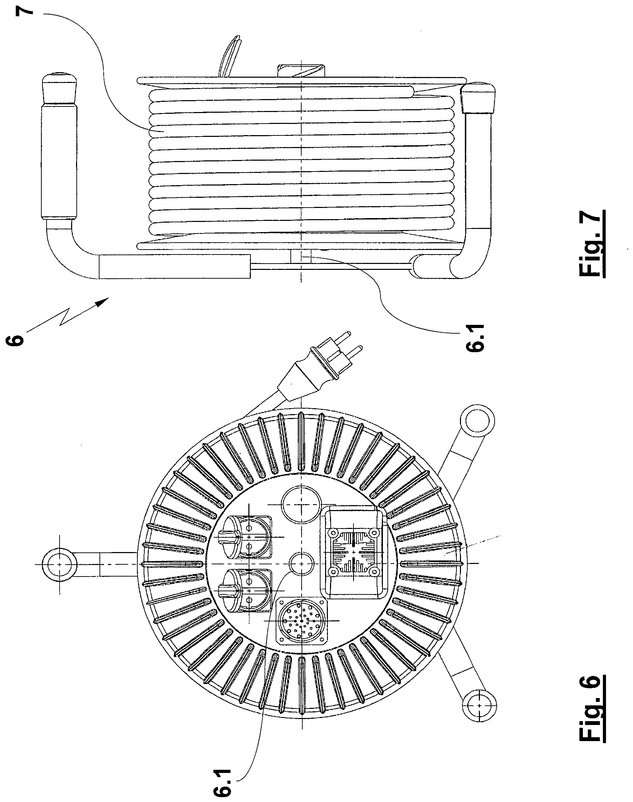

Fig. 6 zeigt die Seitenansicht einer mit einem Kabel 7 bestückten Kabeltrommel, die auf die drehbare Achse 6.1 eines Traggestells 6 montiert ist. Dabei ist der Aufnahmestutzen 1.1 der Stirnfläche 1.5 des Gehäuseteils 1, der Übersichtlichkeit halber, noch nicht mit einer Abdeckkappe 5 verschlossen. Fig. 7 zeigt die Vorderansicht der Kabeltrommel und deren Kontakt mit dem Kabel 7. Die Gehäuseteile 1 und 2 nehmen die durch das durch den lamellierten Hohlkörper 3.1 fließenden Wassers entstehende Kühle ebenfalls auf und übertragen diese auf die übrigen Gehäusteile 1 und 2 und die daran angeformten Kühlrippen 1.3, wodurch auch eine Erwärmung des Kabels minimiert werden kann.

Wenn die Kabeltrommel abgestellt und längere Zeit nicht benutzt wird, werden die Verriegelungen 5.1 der Abdeckkappen 5 entriegelt. Im lamellierten Hohlkörper 3.1 verbliebene Wasserreste gefrieren bei frostigen Temperaturen, das Eis dehnt sich aus und die aus Kunststoff bestehenden Abdeckkappen 5 werden aus den Aufnahmestutzen 1.2 und 2.2 herausgedrückt, weshalb der lamellierte Hohlkörper 3.1 nicht zerstört werden kann.

### Aufstellung der verwendeten Bezugszeichen

- 1.: Gehäuseteil,
- 1.1: Kühlrippen,
- 1.2: Aufnahmestutzen,
- 1.3: Steckdosen,
- 1.4: Adapterdose,
- 1.5: Stirnfläche,
- 1.6: Zylinderwand,
- 1.7: Achshülse,
- 1.8: Stabilisierungsfläche,
- 2.: Gehäuseteil,
- 2.1: Kühlrippen,
- 2.2: Aufnahmestutzen,
- 3: ganzheitlicher Kühlkörper,
- 3.1: lamelierter Hohlkörper,
- 3.1.1: Stirnfläche von 3.1
- 4: Servoverstärker,
- 4.1: Platte für 4.,
- 5: Abdeckkappe,
- 5.1: Einlauf- und Auslaufstutzen,
- 5.2: Leckagestelle,
- 5.3: Rastelemente
- 6: Tragegestell,
- 6.1: Achse,
- 7.: Kabel

## Patentansprüche

1. Kabeltrommel mit integriertem Servoverstärker zur Steuerung eines externen Servomotors mit einem offenen Kühlsystem, aufweisend ein Gehäuse (1, 2), einen Servoverstärker (4), einen Kühlkörper (3) und Abdeckkappen (5) für das offene Kühlsystem, wobei
das Gehäuse der Kabeltrommel aus zwei einstückigen Gehäuseteilen (1, 2) mit an den Außenflächen radial angeformten Kühlrippen (1.1, 2.1) besteht,
die Gehäuseteile (1, 2) an den Innenflächen jeweils axial gegenüberliegend eine angeformte Zylinderwand (1.6) und innerhalb der Zylinderwand (1.6) jeweils einen Aufnahmestutzen (1.2, 2.2) aufweisen,
der Kühlkörper (3) aus den zwei einstückigen Gehäuseteilen (1, 2) besteht, die über einen, zwischen den Aufnahmestutzen (1.2, 2.2) angeordneten wasser- oder luftführenden, lamellierten Hohlkörper (3.1) wasserdicht oder luftdicht miteinander verbunden sind und die Gehäuseteile (1,2) mit dem Hohlkörper (3.1) einen ganzheitlichen, aktiven Kühlkörper (3) bilden,
jeweils eine Abdeckkappe (5) mit einem Wasserein- und -auslaufstutzen (5.1) sowie einer Leckagestelle (5.2) für eine Wasserkühlung oder mit einem Lüfter für eine Luftkühlung ausgestattet und in jeweils einen der Aufnahmestutzen (1.2, 2.2) einzustecken ist und
in den Gehäuseteilen (1, 2) der Kabeltrommel, innerhalb der Zylinderwände (1.6), über dem lamellierten Hohlkörper (3.1) ein Servoverstärker (4) angeordnet ist, dessen Wärme abgebende Teile mit der axialen Außenwand des lamellierten Hohlkörpers (3.1) kontaktierend verbunden sind.

2. Kabeltrommel mit integriertem Servoverstärker nach Anspruch 1, **dadurch gekennzeichnet, daß** in gegenüberliegenden Stirnflächen (1.5) der Gehäuseteile (1, 2) der Kabeltrommel die Aufnahmestutzen (1.2, 2.2) eingeformt sind, axial in das Innere der Gehäuseteile (1, 2) der Kabeltrommel hinein ragen und beidseitig mit zwei gegenüberliegenden Stirnflächen (3.1.1) des lamellierten Hohlkörpers (3.1) kraftschüssig miteinander verbunden sind.

3. Kabeltrommel mit integriertem Servoverstärker nach Anspruch 2, **dadurch gekennzeichnet, daß** in der Stirnfläche (1.5) des Gehäuseteils (1) mindestens eine Steckdose (1.3) mit Verschlußdeckel für die Energiezufuhr und eine Adapterdose (1.4) für den Anschluß eines Servomotors an den Servoverstärker (4) von der Außenwand des Gehäuseteils (1) zugänglich angeordnet sind.

4. Kabeltrommel mit integriertem Servoverstärker nach einem der vorhergehenden Ansprüche, **dadurch gekennzeichnet, daß** der ganzheitliche Kühlkörper (3), bestehend aus den Gehäuseteilen (1, 2) mit den an den Außenflächen angeformten Kühlrippen (1.1, 2.1) und den axial in das Innere der Gehäusteile (1, 2) ragenden Aufnahmestutzen (1.2, 2.2) sowie der lamellierte Hohlkörper (3.1) aus Aluminium bestehen.

5. Kabeltrommel mit integriertem Servoverstärker nach einem der vorhergehenden Ansprüche, **dadurch gekennzeichnet, daß** die Abdeckkappen (5) aus Kunststoff bestehen.

## Claims

1. A cable drum comprising an integrated servo amplifier for controlling an external servo motor with an open cooling system, said drum comprising a housing (1, 2), a servo amplifier (4), a cooling member (3) and cover lids (5) for the open cooling system, wherein the housing of the cable drum consists of two one-piece housing parts (1, 2) with radial cooling ribs (1.1, 2.1) formed on the outer surfaces thereof, each of said housing parts (1, 2) comprising a cylindrical wall (1.6) formed on the inner surface thereof, respectively, each of said cylindrical walls (1.6) axially opposing one another and comprising a supporting connector (1.2, 2.2) therein,
the cooling member (3) consisting of the two one-piece housing parts (1, 2) connected together by way of a lamellar hollow member (3.1) disposed between the supporting connectors (1.2, 2.2), said hollow member conveying water or air, the housing parts (1,2) together with the hollow member (3.1) integrally forming an active cooling member (3),
each cover lid (5) being equipped with a water inlet and outlet nozzle (5.1) and a leak point (5.2) for a water cooling system or with a fan for an air cooling system and being inserted into one of the supporting connectors (1.2, 2.2), respectively, and
wherein a servo amplifier (4) is disposed in the housing parts (1, 2) of the cable drum above the lamellar hollow member (3.1) inside the cylindrical walls (1.6), the heat-dissipating parts of the amplifier contacting the axial outer wall of the lamellar hollow member (3.1).

2. The cable drum with integrated servo amplifier according to claim 1, **characterised in that** the supporting connectors (1.2, 2.2) are formed in opposing end surfaces (1.5) of the housing parts (1, 2) of the cable drum, and protrude axially into the interior of the housing parts (1, 2) of the cable drum and are connected together in a force-fitted manner on both sides by way of two opposing end surfaces (3.1.1) of the lamellar hollow member (3.1).

3. The cable drum with integrated servo amplifier according to claim 2, **characterised in that** disposed in the end surface (1.5) of the housing part (1) and accessible from the outside wall of the housing part (1) are at least one socket (1.3) for energy input with a closure lid and an adapter socket (1.4) for connecting a servo motor to the servo amplifier (4).

4. The cable drum with integrated servo amplifier according to one of the previous claims, **characterised in that** the entirety of the cooling member (3), consisting of the housing parts (1, 2) with the cooling ribs (1.1, 2.1) formed on the outside surfaces thereof and the supporting connectors (1.2, 2.2) protruding axially into the inside of the housing parts (1, 2), as well as the lamellar hollow member (3.1), are made of aluminium.

5. The cable drum with integrated servo amplifier according to one of the previous claims, **characterised in that** the cover lids (5) are made of plastic.

## Revendications

1. Enrouleur de câble avec servoamplificateur intégré destiné à la commande d'un servomoteur externe doté d'un système de refroidissement ouvert, présentant un boîtier (1, 2), un servoamplificateur (4), un corps de refroidissement (3) et des capuchons (5) pour le système de refroidissement ouvert, où
le boîtier de l'enrouleur de câble est constitué de deux parties de boîtier d'un seul tenant (1, 2) doté de nervures de refroidissement (1.1, 2.1) formées radialement sur les surfaces extérieures, les parties de boîtier (1, 2) présentent chacune, au niveau des surfaces intérieures, axialement à l'opposé, une paroi cylindrique (1.6) moulée, et chacune à l'intérieur de la paroi cylindrique (1.6), une tubulure de support (1.2, 2.2),
le corps de refroidissement (3) est constitué des deux parties de boîtier (1, 2) d'un seul tenant, qui sont reliées ensemble de manière étanche à l'eau ou à l'air par le biais d'un corps creux (3.1) lamellé, guidant l'eau ou l'air, disposé entre les tubulures de supports (1.2, 2.2), et les parties de boîtier (1,2) forment chacune avec le corps creux (3.1) un corps de refroidissement (3) intégral actif, un capuchon (5) équipé d'une tubulure d'entrée et d'une tubulure de sortie d'eau (5.1), ainsi que d'un point de fuite (5.2) pour un refroidissement à l'eau, ou avec un aérateur pour un refroidissement à l'air, et est à insérer respectivement dans une des tubulures de supports (1.2, 2.2), et
dans les parties de boîtiers (1, 2) de l'enrouleur de câble, à l'intérieur des parois cylindriques (1.6), un servoamplificateur (4) est disposé pardessus le corps creux (3.1) lamellé, les parties du servoamplificateur délivrant de la chaleur sont reliées en contactant la paroi extérieure axiale du corps creux (3.1) lamellé.

2. Enrouleur de câble doté d'un servoamplificateur intégré selon la revendication 1, **caractérisé en ce qu'**au niveau de surfaces frontales (1.5) opposées des parties de boîtier (1, 2) de l'enrouleur de câble, les tubulures de support (1.2, 2.2) sont incorporés, dépassent axialement à l'intérieur des parties de boîtier (1, 2) de l'enrouleur de câble et sont reliés ensemble par liaison mécanique positive des deux côtés avec deux surfaces frontales (3.1.1) opposées du corps creux (3.1) lamellé.

3. Enrouleur de câble doté d'un servoamplificateur intégré selon la revendication 2, **caractérisé en ce que** dans la surface frontale (1.5) de la partie de boîtier (1), au moins une prise de courant (1.3) avec un capuchon de fermeture pour une alimentation en énergie et une prise d'adaptateur (1.4) pour le branchement d'un servomoteur au niveau du servoamplificateur (4) sont agencés, accessibles à partir de la paroi extérieure de la partie de boîtier (1).

4. Enrouleur de câble doté d'un servoamplificateur intégré selon l'une des revendications précédentes, **caractérisé en ce que** le corps de refroidissement (3) intégral, constitué des parties de boîtier (1, 2) avec les nervures de refroidissement 1.1, 2.1) formées sur les surfaces extérieures et les tubulures de supports (1.2, 2.2) dépassant axialement à l'intérieur des parties de boîtier (1, 2), ainsi que le corps creux (3.1) lamellé sont constitués d'aluminium.

5. Enrouleur de câble doté d'un servoamplificateur intégré selon l'une des revendications précédentes, **caractérisé en ce que** les capuchons (5) sont constitués de matière plastique.
